# Europäisches Patentamt

# European Patent Office

# Office européen des brevets

(19)

(11) Veröffentlichungsnummer: **0 190 555**
**B1**

(12) **EUROPÄISCHE PATENTSCHRIFT**

(45) Veröffentlichungstag der Patentschrift:
**18.01.89**

(51) Int. Cl.⁴: **G11B 5/55**, G11B 21/08

(21) Anmeldenummer: **86100172.5**

(22) Anmeldetag: **08.01.86**

(54) **Verfahren und Anordnung zum Positionieren eines Magnetkopfs auf verschiedene Spuren eines Magnetbands.**

(30) Priorität: **08.02.85 DE 3504384**

(43) Veröffentlichungstag der Anmeldung:
**13.08.86 Patentblatt 86/33**

(45) Bekanntmachung des Hinweises auf die Patenterteilung:
**18.01.89 Patentblatt 89/3**

(84) Benannte Vertragsstaaten:
**DE GB**

(56) Entgegenhaltungen:
EP-A- 0 051 754
DE-A- 2 327 031
DE-A- 3 032 797
GB-A- 827 667
US-A- 3 731 177
US-A- 3 800 317
US-A- 4 313 141

PATENTS ABSTRACTS OF JAPAN, Band 4,
Nr. 149 (P-32) [631], 21. Oktober 1980, Seite 28 P 32; &
JP - A - 55 97 025 (TOKYO SHIBAURA DENKI
K.K.) 23.07.1980
PATENTS ABSTRACTS OF JAPAN, Band 6, Nr. 255, 14.
Dezember 1982, Seite 153 P 162; & JP - A
- 57 152 515 (TOKYO SHIBAURA DENKI K.K.) 20.09.1982
PATENTS ABSTRACTS OF JAPAN, Band 8,

(73) Patentinhaber: **TANDBERG DATA A/S,
Kjelsasveien 161 Postboks 9 Korsvoll,
N-0808 Oslo 8(NO)**

(72) Erfinder: **Dahlerud, Ole Chr., Holmboes gt. 5B,
N-0357 Oslo 3(NO)**

(74) Vertreter: **Mehl, Ernst, Dipl.-Ing. et al, Postfach 22 13 17,
D-8000 München 22(DE)**

(56) Entgegenhaltungen: (Fortsetzung)
Nr. 72 (P-265) [1509], 4. April 1984, Seite 110 P 265; & JP
- A - 58 218 031 (TOKYO SHIBAURA DENKI
K.K.) 19.12.1983
JOURNAL OF THE AUDIO ENGINEERING SOCIETY,
Band 25, Nr. 12, Dezember 1977, Seiten 1041-1044, New
York, US; E.R. HANSON: "A uniform track-positioning
and dimensioning system for magnetic recording"

## Beschreibung

Die Erfindung bezieht sich auf ein Verfahren und eine Anordnung zum Positionieren eines Magnetkopfs auf verschiedene Spuren eines Magnetbands in einem Magnetbandgerät.

Aus der US-A 4 313 141 sind ein Verfahren und eine Anordnung zum Positionieren eines Magnetkopfs auf verschiedene Spuren eines Magnetbands in einem Magnetbandgerät bekannt mit einer mit einem Elektromotor versehenen Positioniereinrichtung, die mindestens einen Schreib/Lesekopf in dem Magnetkopf senkrecht zur Bewegungseinrichtung des Magnetbands auf die verschiedenen Spuren positioniert und mit einer Steuereinheit, die durch Vergleich der jeweiligen Ist-Positionen des Magnetkopfs mit den verschiedenen Spuren zugeordneten Soll-Positionen Steuersignale für eine Motorsteuerung zum Ansteuern des Elektromotors der Positioniereinrichtung erzeugt.

Obwohl für die Positioniereinrichtung präzise Bauteile verwendet werden, ist eine Abweichung eines Schreib/Lesekopfs von der genauen Mitte einer Spur um bis zu ±40 μm möglich, wenn der Magnetkopf an den äußeren Spuren positioniert wird. Bei Magnetbandgeräten mit einer geringen Anzahl von Spuren macht diese Abweichung keine Schwierigkeiten bei der Aufzeichnung oder Wiedergabe von Signalen. Falls jedoch die Anzahl der Spuren auf demselben Magnetband auf beispielsweise 8 oder sogar 20 erhöht wird, können derartige Toleranzen von ±40 μm nicht hingenommen werden.

Der Erfindung liegt daher die Aufgabe zugrunde, ein Verfahren und eine Anordnung zum Positionieren eines Magnetkopfs auf verschiedene Spuren eines Magnetbands anzugeben, bei deren Verwendung auch bei einer hohen Anzahl von Spuren auf dem Magnetband eine genaue Positionierung der Schreib/Leseköpfe auf die Mitten der Spuren möglich ist.

Erfindungsgemäß wird die Aufgabe bei dem Verfahren der eingangs genannten Art durch die im kennzeichnenden Teil des Patentanspruches 1 angegebenen Merkmale und bei der Anordnung der eingangs genannten Art durch die im kennzeichnenden Teil des Patentanspruches 9 angegebenen Merkmale gelöst.

Das Verfahren gemäß der vorliegenden Erfindung hat den Vorteil, daß auch bei Magnetbandgeräten, bei denen eine hohe Spurzahl verwendet wird, die Bauteile des Magnetbandgeräts für die geringere Spurdichte ohne höhere Anforderungen an die Toleranzen übernommen werden können, da der Ausgleich der Toleranzen nicht durch mechanische Maßnahmen, sondern durch elektronische Maßnahmen erfolgen. Damit sind für den mechanischen Aufbau keinerlei Mehrkosten erforderlich, um auf eine Mehrzahl von Spuren genau positionieren zu können.

Die während des Meßvorgangs ermittelten Positionswerte werden zweckmäßigerweise in einem löschbaren und wiederbeschreibbaren Festwertspeicher gespeichert.

Es ist auch möglich, die Positionswerte aus für eine Mehrzahl von Magnetbandgeräten gleichen Normalwerten und für jedes Magnetbandgerät während des Meßvorgangs individuell ermittelten Korrekturwerten zu bilden.

Als Bezugsposition kann beispielsweise eine mittlere Spur vorgesehen werden, und es werden während des Meßvorgangs die Positionswerte der Positionen der Schreib/Leseköpfe von den Mitten der jeweils äußeren Spuren ermittelt. Als Bezugsposition kann auch eine äußere Spur verwendet werden, und während des Meßvorgangs werden die Positionswerte in Richtung auf die andere äußere Spur ermittelt. Weiterhin kann als Bezugsposition auch eine Kante des Magnetbands verwendet werden.

Falls die Positioniereinrichtung einen Schrittmotor enthält, geben die Positionswerte jeweils eine vorgegebene Anzahl von Schritten an, die der Position entsprechen. Wenn die Positionswerte aus den Normalwerten und den Korrekturwerten gebildet werden, werden diese Schritte jeweils von der Normalschrittanzahl subtrahiert oder zu dieser hinzuaddiert, um den Schreib/ Lesekopf genau auf die Mitte der Spur zu positionieren.

Es ist auch denkbar, als Antriebsmotor für die Positioniereinrichtung einen Gleichstrommotor zu verwenden, der mit einer Taktscheibe und zugeordneten optoelektronischen Abtastelementen versehen ist. In diesem Fall geben die Positionswerte bzw. die Korrekturwerte jeweils vorgegebene Anzahlen von Taktimpulsen an bzw. die von den jeweiligen Normaltaktimpulsanzahlen zu subtrahiert oder zu diesen hinzuaddierenden Anzahlen von Taktimpulsen an.

Häufig weisen die Positioniereinrichtungen auch unterschiedliches Spiel auf in Abhängigkeit davon, in welcher Richtung der Positioniervorgang erfolgt. So kann beispielsweise die Schrittanzahl zum Positionieren einer mittleren Spur unterschiedlich sein, in Abhängigkeit davon, in welcher Richtung, d. h. von welcher äußeren Spur in Richtung auf diese mittlere Spur positioniert wird. Zum Ausgleich auch dieses Spiels können die Positionswerte oder die Korrekturwerte für die verschiedenen Spuren unterschiedlich groß sein, in Abhängigkeit von welcher Richtung aus auf diese Spur positioniert wird.

Die Ermittlung der Positionswerte bzw. der Korrekturwerte kann dadurch erfolgen, daß während des Meßvorgangs der Schreib/Lesekopf auf die Mitte jeder Spur genau positioniert wird und daß dabei die Positionswerte bzw. die Korrekturwerte ermittelt werden. Es ist auch möglich, beispielsweise ausgehend von der mittleren Bezugsposition, die Positionswerte bzw. die Korrekturwerte bei den beiden äußeren Spuren zu ermitteln und die Positionswerte bzw. die Korrekturen für die dazwischenliegenden Spuren durch Interpolation zu ermitteln. Es kann auch ausreichend sein, die Korrekturwerte jeweils einer Gruppe von einander benachbarten Spuren zusammenzufassen und beim Positionieren auf eine beliebige Spur dieser Gruppe jeweils den dieser Gruppe zugeordneten Korrekturwert zu verwenden.

Bei einer vorteilhaften Anordnung zur Durchführung des Verfahrens kann eine Steuereinheit vorgesehen sein, die aus der Differenz zwischen einem der Ist-Position des Magnetkopfs zugeordneten Wert und einem während des Meßvorgangs ermittelter Soll-Positionswert des Magnetkopfs die Steuersignale für eine Motorsteuerung des Elektromotors der Positioniereinrichtung erzeugt. Die Steuereinheit kann einen löschbaren und wiederbeschreibbaren Festwertspeicher enthalten, in dem nach dem Meßvorgang die für jedes Magnetbandgerät individuell ermittelten Positionswerte gespeichert sind und der beim Positionieren auf eine Spur die Positionswerte an einen Vergleicher abgibt, der diese Positionswerte mit in einem Speicher gespeicherten Werten für die jeweilige Ist-Position des Magnetkopfs vergleicht. Die Steuereinheit kann auch einen Festwertspeicher, in dem die allen Spuren zugeordneten Normalwerte gespeichert sind, einen weiteren Speicher, in dem die Korrekturwerte gespeichert sind, und einen Addierer enthalten, der beim Ansteuern einer bestimmten Spur die Korrekturwerte zu den Normalwerten hinzuaddiert. Die Korrekturwerte können positives und negatives Vorzeichen haben, so daß im Addierer eine Addition oder eine Subtraktion stattfindet.

Die Steuereinheit kann auch einen Mikrorechner umfassen, der unter Verwendung der Positionswerte oder der Korrekturwerte die Steuersignale für die Positioniereinrichtung erzeugt.

Der Speicher für die Korrekturwerte kann auch als eine Schaltereinheit mit einer Mehrzahl von Schaltern ausgebildet sein, die beispielsweise einen Korrekturwert abgeben, der bei dem Positionieren auf eine äußere Spur auftritt. Aus diesem Korrekturwert kann dann durch Interpolation auf die Korrekturwerte der inneren Spuren geschlossen werden.

Im folgenden werden das Verfahren gemäß der vorliegenden Erfindung und eine Anordnung zur Durchführung des Verfahrens anhand von Zeichnungen näher erläutert. Es zeigen

Fig. 1 ein Blockbild der Anordnung zur Durchführung des Verfahrens,

Fig. 2 eine schematische Darstellung von n Spuren auf einem Magnetband,

Fig. 3 eine Darstellung der Abweichungen eines Schreib/Lesekopfs in einem Magnetkopf beim Positionieren auf die Mitten verschiedener Spuren,

Fig. 4 eine erste Ausführungsform einer Steuereinheit,

Fig. 5 eine zweite Ausführungsform der Steuereinheit,

Fig. 6 eine dritte Ausführungsform der Steuereinheit.

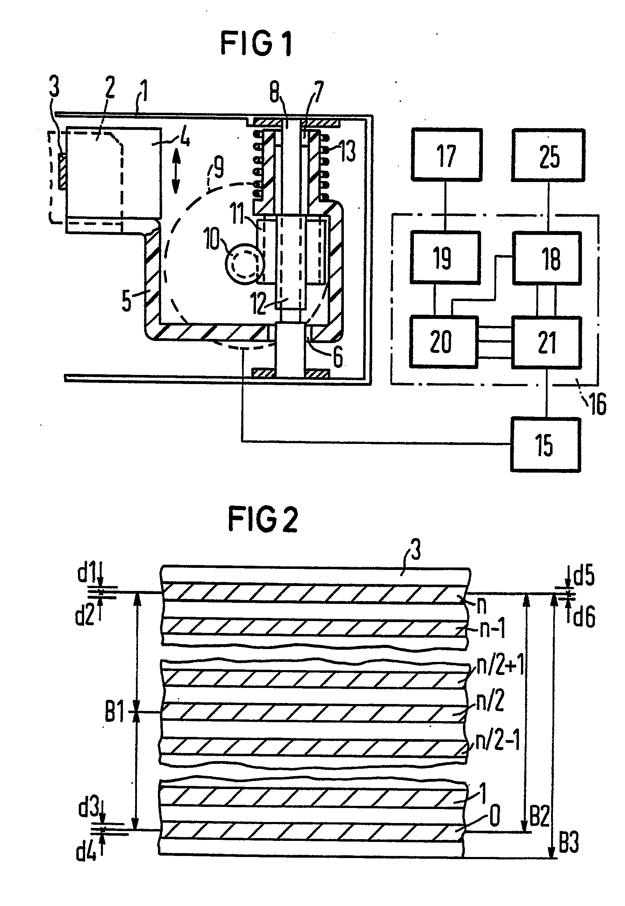

Die in Fig. 1 dargestellte Anordnung zeigt einen Ausschnitt aus einem Magnetbandgerät, das als Kassettenmagnetbandgerät ausgebildet ist. Ein derartiges Kassettenmagnetbandgerät ist beispielsweise der DE-OS 3 244 165 oder der DE-OS 3 244 149 zu entnehmen. In einem Gehäuse 1 des Magnetbandkassettengeräts ist eine nicht dargestellte Antriebsanordnung für das Magnetband 3 und eine Positioniereinrichtung für einen Magnetkopf 4 angeordnet, um Schreib/Leseköpfe des Magnetkopfs 4 auf verschiedene Spuren des Magnetbands 3 zu positionieren. Eine gestrichelt dargestellte Magnetbandkassette 2 mit dem Magnetband 3 ist in das Magnetbandgerät einsetzbar. Der Magnetkopf 4 greift während des Betriebs des Magnetbandgeräts in eine Öffnung der Kassette 2 ein. Der Magnetkopf 4 ist auf einem Kopfträger 5 befestigt und gemeinsam mit diesem unter Verwendung von zwei Lagern 6 und 7 längs einer Achse 8 in Querrichtung des Magnetbands 3 verschiebbar.

Die Verschiebung des Magnetkopfs 4 erfolgt unter Verwendung eines Elektromotors 9, der vorzugsweise als Schrittmotor ausgebildet ist, jedoch auch als Gleichstrommotor ausgebildet sein kann. Auf der Achse des Motors 9 ist eine Schnecke 10 befestigt, die mit einem Schneckenrad 11 in Wirkverbindung steht. Die Achse 8 weist im Bereich des Schneckenrads 11 ein Außengewinde 12 auf, das mit einem Innengewinde des Schneckenrads 11 in Wirkverbindung steht. Wenn sich die Schnecke 10 dreht, wird das Schneckenrad 11 angetrieben, so daß dieses sich in axialer Richtung der Achse 8 bewegt. Eine Druckfeder 13 drückt den Kopfträger 5 gegen das Schneckenrad 11, so daß dieser der Bewegung des Schneckenrads 11 in axialer Richtung folgt und damit den Magnetkopf 4 auf verschiedene Spuren des Magnetbands 3 positioniert. Während der Bewegung des Kopfträgers 5 in axialer Richtung der Achse 8 wird verhindert, daß dieser sich mit der Drehung des Schneckenrads 11 drehen kann. Während des Einschiebens oder Herausnehmens der Kassette 2 ist der Magnetkopf 4 gemeinsam mit dem Kopfträger 5 jedoch aus der Arbeitsstellung in eine Ruhestellung schwenkbar. Der Motor 9 erhält von einer Motorsteuerung 15 Steuersignale, die beispielsweise als Schrittimpulse ausgebildet sind, wenn der Motor 9 ein Schrittmotor ist. Die Motorsteuerung 15 wird von einer Steuereinheit 16 angesteuert, die beim Positionieren eines Schreib/Lesekopfs in dem Magnetkopf 4 auf eine bestimmte Spur des Magnetbands 3 die Steuersignale empfängt, um von einer Ist-Position, beispielsweise einer bestimmten Spur, auf eine Soll-Position, beispielsweise eine andere Spur, zu gelangen. Die Funktion einer derartigen Steuereinheit 16 ist für eine normale Positionierung allgemein bekannt und beispielsweise der US-PS 4 313 141 zu entnehmen.

Eine bestimmte Spur wird der Steuereinheit 16 von einer zentralen Steuereinheit des Magnetbandgeräts oder einem Mikrorechner mitgeteilt, die schematisch als Soll-Spurgeber 17 dargestellt sind. Die Ist-Position, in der sich der Magnetkopf 4 jeweils befindet, ist in einem Speicher 18 gespeichert.

Zu Beginn des Betriebs des Magnetbandgeräts wird der Magnetkopf 4 in eine Bezugsposition gebracht, die durch den Bezugspositionsgeber 25 ermittelt wird. Diese Bezugsposition ist beispielsweise ein äußerer Rand des Magnetbands 3, der durch ein Verfahren ermittelt wird, wie es in der DE-OS 3 112 886 beschrieben ist. Die Bezugsposition kann auch eine erste, beispielsweise äußere oder mittlere Spur des Magnetbands 3 sein oder es kann, wie es in der US-PS 4 313 141 beschrieben ist, eine bestimmte Stellung der Positionseinrichtung sein, die mittels einer Lichtschranke erkannt wird. Diese Bezugsposition ist dann die Ist-Position und ist in dem Speicher 18 gespeichert.

Die Steuereinheit 16 enthält einen als Festwertspeicher ausgebildeten Zuordner 19, der die vom Soll-Spurgeber 17 abgegebene Spurnummer in eine Soll-Position umsetzt. Sowohl die vom Zuordner 19 abgegebene Soll-Position als auch die vom Speicher 18 abgegebene Ist-Position werden einem Vergleicher 20 zugeführt, der aus der Differenz zwischen der Soll- und der Ist-Position den Abstand sowohl hinsichtlich des Betrags als auch hinsichtlich der Richtung ermittelt und einen Impulsgeber 21 veranlaßt, an die Motorsteuerung 15 solange Impulse für den Schrittmotor 9 abzugeben, bis die Soll-Position und die Ist-Position übereinstimmen. Der Magnetkopf 4 wird damit unter Verwendung des Motors 9 auf die gewünschte Spur positioniert. Gleichzeitig werden die Impulse dem Speicher 18 zugeführt, so daß dieser die neue Ist-Position beinhaltet. Der Speicher 18 kann zu diesem Zweck einen Addierer enthalten, der von der Ist-Position jeweils die entsprechende Anzahl von Impulsen subtrahiert oder zu dieser hinzuaddiert. Er kann auch als Zähler ausgebildet sein, dessen Zählerstand die jeweilige Ist-Position angibt und der durch die von dem Impulsgeber 21 abgegebenen Impulse jeweils aufwärts oder abwärts gezählt wird.

Wie bereits erwähnt, kann der Motor 9 auch als Gleichstrommotor ausgebildet sein. Zur genauen Positionierung kann auf der Achse des Gleichstrommotors in diesem Fall eine Taktscheibe angeordnet sein, bei der eine Vielzahl von Schlitzen durch optoelektronische Elemente abgetastet werden. In diesem Fall gibt der Impulsgeber 21 an die Motorsteuerung 15 solange Signale ab, bis eine vorgegebene Anzahl von Taktimpulsen abgetastet wurde, die der Differenz zwischen der Soll- und der Ist-Position entspricht.

Falls auf das Magnetband 3 die Aufzeichnung der Daten in vier parallelen Spuren erfolgt und der Magnetkopf 4 zwei Schreib/Leseköpfe enthält, die jeweils auf zwei der Spuren positionierbar sind, sind die entsprechenden Soll-Positionen als gleiche Normalwerte N für eine Mehrzahl von Magnetbandgeräten in dem Zuordner 19 fest gespeichert, und die Positionierung erfolgt ohne Schwierigkeiten. Falls jedoch auf dem Magnetband die Aufzeichnung in sehr vielen Spuren, beispielsweise 20 Spuren, erfolgt, kann der Fall eintreten, daß in dem Zuordner 19 nicht mehr für alle Magnetbandgeräte einer Serie dieselben Soll-Positionen gespeichert werden können, da infolge von mechanischen Toleranzen in der Positioniereinrichtung die Schreib/Leseköpfe nicht mehr genau auf die Mitten der verschiedenen Spuren positioniert werden.

Bei der Darstellung in Fig. 2 ist ein kurzer Ausschnitt des Magnetbands 3 dargestellt, auf dem die Daten in einer Vielzahl n von Spuren aufgezeichnet werden. Als Bezugsposition B1 kann beispielsweise eine mittlere Spur $\frac{n}{2}$ verwendet werden, von der aus auf andere Spuren positioniert wird. Wenn nun ausgehend von dieser Bezugsposition B1, beispielsweise auf die Spuren n oder 0, positioniert wird, können infolge von mechanischen Toleranzen der Positioniereinrichtung Abweichungen d1 bis d4 auftreten, die nicht mehr mit den vorgesehenen Mitten der Spuren übereinstimmen. In entsprechender Weise können Abweichungen d5 und d6 auftreten, wenn ausgehend von einer äußeren Spur 0 als Bezugsposition B2 oder von der Kante des Magnetbands 3 als Bezugsposition B3 auf die andere äußere Spur n positioniert wird. Diese Abweichungen d5 und d6 können beispielsweise größer sein als die Abweichungen d1 bis d4, da der Weg, den der Magnetkopf 4 zurücklegt, in diesen Fällen größer ist als bei der Verwendung der Bezugsposition B1.

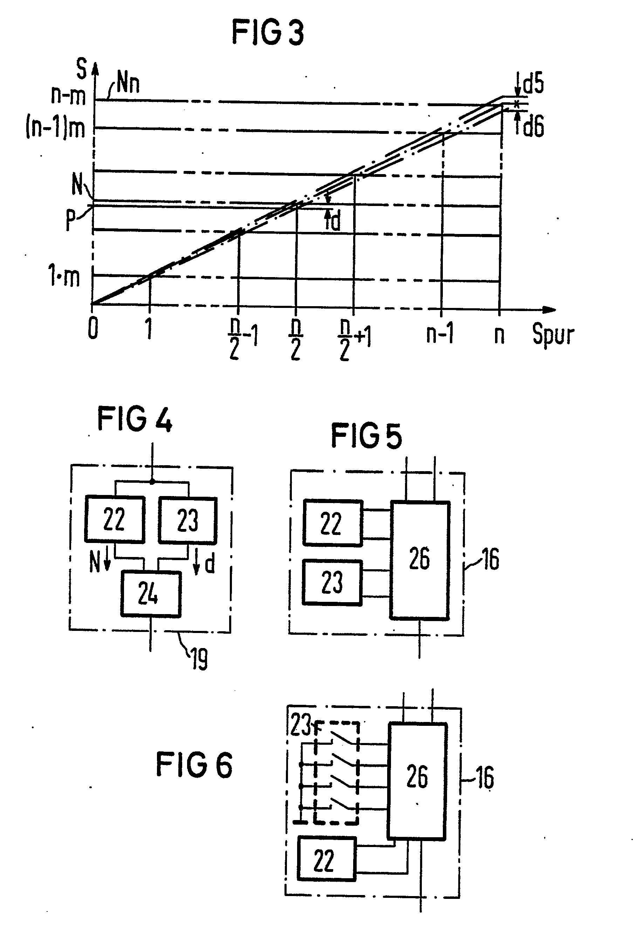

Bei der Darstellung in Fig. 3 sind die Abweichungen bei der Positionierung auf die Spuren 0 bis n in Form eines Diagramms dargestellt, wobei davon ausgegangen wird, daß als Bezugsposition die äußere Spur 0 gewählt wird. Entsprechendes gilt bei der Verwendung einer mittleren Spur als Bezugsposition B1 oder der Kante des Magnetbands 3 bei der Bezugsposition B3. Nach der Montage der Positioniereinrichtung und des Magnetkopfs 4 werden während eines Meßvorgangs entweder die im Zuordner 19 zu speichernden genauen Positionswerte P, die zum Positionieren auf die Mitten der gewünschten Spuren erforderlich sind oder die bei der Positionierung auf in dem Zuordner 19 gespeicherte Normalwerte N festgestellten Abweichungen von den Mitten der Spuren in Form von Korrekturwerten d ermittelt, die die genauen Positionen bzw. die Abweichungen durch jeweils eine Anzahl von Schritten bei Verwendung eines Schrittmotors oder durch jeweils eine Anzahl von Taktimpulsen bei der Verwendung eines Gleichstrommotors mit Taktscheibe angeben. Diese Korrekturwerte entsprechen bei der Positionierung auf die Spur n den Abweichungen d5 oder d6. Um von der Spur 0 zu Spur n zu gelangen, sind entsprechend dem Inhalt des Zuordners 19 n x m Schritte als Normalwert Nn erforderlich, die in Ordinatenrichtung angegeben sind, wenn als Elektromotor 9 ein Schrittmotor verwendet wird. In entsprechender Weise sind $\frac{n}{2}$ x m Schritte als Normalwert N erforderlich, um zu einer mittleren Spur $\frac{n}{2}$ zu gelangen. Zur genauen Positionierung auf die Mitte dieser Spur können noch weitere oder weniger Schritte erforderlich sein, die zusammen mit dem Normalwert N durch den Positionswert P oder durch den jeweiligen Korrekturwert d für die Spur festgelegt werden. Die Positionswerte P oder die Korrekturwerte d werden für jedes Magnetbandgerät nach der Montage der Positioniereinrichtung ermittelt und gespeichert. Es kann dabei für jede Spur der entsprechende Positionswert bzw. Korrekturwert d ermittelt werden. Es ist auch möglich, ausgehend von der jeweiligen Bezugsposition beim Positionieren auf eine weitab liegende Spur, beispielsweise die äußere Spur, den Gesamtwert festzustellen und durch Interpolation die Werte bei den anderen Spuren zu ermitteln. Es ist auch möglich, jeweils eine Gruppe von einander benachbarten Spuren zusammenzufassen und mit einem Korrekturwert d zu versehen.

Die Abweichung kann beim Positionieren von einer äußeren Spur auf die andere äußere Spur oder von der Kante des Magnetbands 3 auf die äußere Spur an der anderen Kante des Magnetbands ±40 μm betragen. Diese Abweichung kann ±8 Schritten des Schrittmotors 9 entsprechen. Der Korrekturwert d kann dann durch ein Vierbitwort angegeben werden, wobei das höchstwertige Bit das Vorzeichen und die übrigen drei Bits die Anzahl der Schritte angibt. Für jede Spur oder jede Gruppe von Spuren kann dann durch Interpolation, beispielsweise lineare Interpolation, der jeweilige Korrekturwert d ermittelt werden. Beim Positionieren auf eine vorgegebene Spur gibt dann der Zuordner 19 nicht die normale Schrittzahl an, sondern dann die um den Korrekturwert korrigierte Schrittzahl an.

Der in Fig. 1 dargestellte Zuordner 19 ist als sogenannter EEPROM (elektrisch löschbarer und wiederbeschreibbarer Festwertspeicher) ausgebildet, und in ihm werden nach dem Meßvorgang die Positionswerte P für jede Spur eingespeichert.

Der in Fig. 4 dargestellte Zuordner 19 enthält einerseits einen Speicher 22 für die Normalwerte N der Schrittanzahl für die Positionierung auf die verschiedenen Spuren. Zusätzlich ist ein Speicher 23 für die Korrekturwerte d vorgesehen. Beim Positionieren auf eine bestimmte Spur, die vom Soll-Spurgeber 17 angegeben wird, werden der Normalwert N und der Korrekturwert d aus dem Speicher 22 bzw. dem Speicher 23 ausgelesen und in einem Addierer 24 addiert und als Soll-Position an den Vergleicher 20 abgegeben. Wie bereits erwähnt, können die Korrekturwerte d in dem Speicher 23 für jede Spur vorgesehen sein. Es kann auch für jeweils eine Gruppe von Spuren derselbe Korrekturwert d vorhanden sein. Weiterhin können die Korrekturwerte d unterschiedlich sein, je nach dem in welcher Richtung auf eine bestimmte Spur positioniert wird, um ein drehrichtungsabhängiges Spiel in der Positioniereinrichtung auszugleichen.

Die in Fig. 5 dargestellte Steuereinheit 16 enthält einen Mikrorechner 26, dem vom Soll-Spurgeber 17 die jeweils gewünschte Spurnummer zugeführt wird und dem auch vom Bezugspositionsgeber 25 der Bezugsposition zugeordnete Signale zuführbar sind. Die Steuereinheit 16 enthält einen als elektrisch löschbaren und wiederbeschreibbaren Festwertspeicher ausgebildeten Speicher für die Positionswerte P oder die beiden Speicher 22 und 23 für die Normalwerte N bzw. die Korrekturwerte d und der Mikrorechner 26 ermittelt aus den Positionswerten P oder aus den Normalwerten N und den Korrekturwerten d die jeweils gewünschte Soll-Position und gibt an die Motorsteuerung 15 die entsprechenden Steuersignale ab.

Bei der in Fig. 6 dargestellten Steuereinheit 16, die ebenfalls einen Mikrorechner 26 aufweist, ist der Speicher 23 für die Korrekturwerte d als Schaltereinheit ausgebildet, die eine Mehrzahl, beispielsweise vier Schalter, aufweist. Nach der Montage der Positioniereinrichtung wird während eines Meßvorgangs, beispielsweise ausgehend von einer äußeren Spur oder der Kante des Magnetbands 3, die Abweichung d5 oder d6 bei der Positionierung auf die andere äußere Spur ermittelt, und die entsprechende Anzahl der Schritte des Schrittmotors 9 wird binärcodiert durch drei Schalter eingegeben. Ein weiterer Schalter gibt das Vorzeichen der Abweichung an. Wenn, wie oben bereits erwähnt, die Abweichung bis zu ±8 Schritten aufweisen kann, kann diese Abweichung durch die drei Schalter binärcodiert eingestellt werden, und der vierte Schalter gibt das Vorzeichen an. Ein Schritt entspricht einer Abweichung von ±5 μm. Der Mikrorechner 26 ermittelt dann durch lineare Interpolation die Abweichung für die jeweilige Spur oder für eine Gruppe von Spuren, um möglichst genau auf die Mitte der jeweiligen Spur positionieren zu können.

Bei der Verwendung eines Festwertspeichers für die Positionswerte P wird während des Meßvorgangs jeweils die Gesamtanzahl der Schritte, die der Summe aus dem Normalwert N und dem Korrekturwert d entspricht, für jede Spur ermittelt und in dem Festwertspeicher gespeichert, der dann den Zuordner 19 darstellt. In diesem Fall ist eine Addition oder Subtraktion der Korrekturwerte d nicht erforderlich, da die Korrekturwerte d bereits bei dem Meßvorgang berücksichtigt werden.

**Patentansprüche**

1. Verfahren zum Positionieren eines Magnetkopfs (4) auf verschiedene Spuren eines Magnetbands (3) in einem Magnetbandgerät, bei dem mindestens ein Schreib/Lesekopf des Magnetkopfs (4) mittels einer mit einem Elektromotor versehenen Positioniereinrichtung senkrecht zur Bewegungsrichtung des Magnetbands (3) auf die verschiedenen Spuren positioniert wird und bei dem durch Vergleich der jeweiligen Ist-Positionswerte des Magnetkopfs (4) mit den verschiedenen Spuren zugeordneten Soll-Positionswerten Steuersignale für eine Motorsteuerung (15) zum Ansteuern des Elektromotors (9) der Positioniereinrichtung erzeugt werden, dadurch gekennzeichnet, daß während eines Meßvorgangs durch ein Positionieren auf mindestens eine Spur ausgehend von einer Bezugsposition (B1 bis B3) die genauen Positionen des Schreib/Lesekopfs des Magnetkopfs (4) auf den Mitten der Spuren auf dem Magnetband (3) ermittelt werden, daß diesen genauen Positionen Positionswerte (P) zugeordnet werden und daß während des normalen Betriebs des Magnetbandgeräts unter Verwendung dieser Positionswerte (P) die Steuersignale für die Motorsteuerung (15) erzeugt werden.

2. Verfahren nach Anspruch 1, dadurch gekennzeichnet, daß die Positionswerte (P) auf für eine Mehrzahl von Magnetbandgeräten gleichen Normalwerten (N) und für jedes Magnetbandgerät individuell ermittelten Korrekturwerten (d) gebildet werden.

3. Verfahren nach Anspruch 1 oder Anspruch 2, dadurch gekennzeichnet, daß als Bezugsposition die einer mittleren Spur ($\frac{n}{2}$) zugeordnete Bezugsposition (B1), die einer äußeren Spur (0) zugeordnete Bezugsposition (B2) oder die einer Kante des Magnetbands (3) zugeordnete Bezugsposition (B3) vorgesehen ist.

4. Verfahren nach einem der Ansprüche 1 bis 3, dadurch gekennzeichnet, daß die Positionswerte (P) jeweils einer vorgegebenen Anzahl von Schritten für die Ansteuerung eines als Schrittmotor ausgebildeten Elektromotors (9) der Positioniereinrichtung zugeordnet sind.

5. Verfahren nach einem der Ansprüche 1 bis 3, dadurch gekennzeichnet, daß die Positionswerte (P) jeweils einer vorgegebenen Anzahl von Taktsignalen für die Ansteuerung eines als Gleichstrommotor mit einer Taktscheibe ausgebildeten Elektromotors (9) der Positioniereinrichtung zugeordnet sind.

6. Verfahren nach einem der Ansprüche 1 bis 5, dadurch gekennzeichnet, daß die Positionswerte (P) in Abhängigkeit von der Richtung, in der auf eine Spur positioniert wird, unterschiedlich sind.

7. Verfahren nach einem der Ansprüche 1 bis 6, dadurch gekennzeichnet, daß die Positionswerte (P) für die verschiedenen Spuren durch die Positionierung auf eine von der Bezugsposition (B1 bis B3) weit entfernten Spur durch Interpolation ermittelt wird.

8. Verfahren nach einem der Ansprüche 2 bis 7, dadurch gekennzeichnet, daß jeweils einer Gruppe voneinander benachbarten Spuren auf dem Magnetband (3) derselbe Korrekturwert (d) zugeordnet wird.

9. Anordnung zum Positionieren eines Magnetkopfs (4) auf verschiedene Spuren eines Magnetbands (3) in einem Magnetbandgerät mit einer mit einem Elektromotor (9) versehenen Positioniereinrichtung, die mindestens einen Schreib/Lesekopf in dem Magnetkopf (4) senkrecht zur Bewegungsrichtung des Magnetbands (3) auf die verschiedenen Spuren positioniert und mit einer Steuereinheit, die durch Vergleich der jeweiligen Ist-Positionswerte des Magnetkopfs (4) mit den verschiedenen Spuren zugeordneten Soll-Positionswerten Steuersignale für eine Motorsteuerung (15) zum Ansteuern des Elektromotors (9) der Positioniereinrichtung erzeugt, dadurch gekennzeichnet, daß in die Steuereinheit (16) die Positionswerte (P) einspeicherbar sind, die während eines Meßvorgangs durch Positionieren auf mindestens eine Spur ausgehend von einer Bezugsposition (B1 bis B3) ermittelten genauen Positionen des Schreib/Lesekopfs des Magnetkopfs (4) auf den Mitten der Spuren auf dem Magnetband (3) zugeordnet sind, und daß die Steuereinheit (16) während des normalen Betriebs des Magnetbandgeräts unter Verwendung dieser Positionswerte (P) die Steuersignale für die Motorsteuerung (15) erzeugt.

10. Anordnung nach Anspruch 9, dadurch gekennzeichnet, daß die Steuereinheit (16) einen löschbaren und wiederbeschreibbaren Festwertspeicher (FS) enthält, in dem die Positionswerte (P) speicherbar sind.

11. Anordnung nach Anspruch 9, dadurch gekennzeichnet, daß die Steuereinheit (16) einen Addierer (24) umfaßt, der aus den Soll-Positionswerten (N) und zugehörigen Korrekturwerten (d) die Steuersignale erzeugt.

12. Anordnung nach Anspruch 9, dadurch gekennzeichnet, daß die Steuereinheit (16) einen Mikrorechner (26) umfaßt, der die Steuersignale erzeugt.

**Claims**

1. Method for positioning a magnetic head (4) onto various tracks of a magnetic tape (3) in a magnetic tape device, in which at least one read/write head of the magnetic head (4) is positioned by means of a positioning device, provided with an electric motor, perpendicular to the direction of movement of the magnetic tape (3) onto the various tracks and in which, by comparison of the respective actual position values of the magnetic head (4) with set position values assigned to the various tracks, control signals for a motor control (15) are generated for the driving of the electric motor (9) of the positioning device, characterized in that the precise positions of the read/write head of the magnetic head (4) on the centres of the tracks on the magnetic tape (3) are determined during a measuring operation by a positioning onto at least one track, starting from a reference position (B1 to B3), in that these precise positions are assigned position values (P) and in that, during the normal operation of the magnetic tape device, the control signals for the motor control (15) are generated using these position values (P).

2. Method according to Claim 1, characterized in that the position values (P) are formed from correction values (d), determined for a plurality of magnetic tape devices of the same normal values (N) and for each magnetic tape device individually.

3. Method according to Claim 1 or Claim 2, characterized in that the reference position (B1) assigned to a middle track $\frac{n}{2}$, the reference position (B2) assigned to an outer track (0) or the reference position (B3) assigned to an edge of the magnetic tape (3) is envisaged as reference position.

4. Method according to one of Claims 1 to 3, characterized in that the position values (p) are in each case assigned to a given number of steps for the driving of an electric motor (9), designed as stepping motor, of the positioning device.

5. Method according to one of Claims 1 to 3, characterized in that the position values (P) are in each case assigned to a given number of clock signals for the driving of an electric motor (9), designed as direct-current motor with a timing disc, of the positioning device.

6. Method according to one of Claims 1 to 5, characterized in that the position values (P) are different depending on the direction in which positioning onto a track is carried out.

7. Method according to one of Claims 1 to 6, characterized in that the position values (P) for the various tracks are determined by the positioning onto a track far away from the reference position (B1 to B3) by interpolation.

8. Method according to one of Claims 2 to 7, characterized in that the same correction value (d) is assigned in each case to a group of mutually neighbouring tracks on the magnetic tape (3).

9. Arrangement for positioning a magnetic head (4) onto various tracks of a magnetic tape (3) in a magnetic tape device, having a positioning device, provided with an electric motor (9), which device positions at least one read/write head in the magnetic head (4) perpendicular to the direction of movement of the magnetic tape (3) onto the various tracks and having a control unit which, by comparison of the respective actual position values of the magnetic head (4) with the various set position values assigned to the various tracks, generates control signals for a motor control (15) for the driving of the electric motor (9) of the positioning device, characterized in that the position values (P) which are assigned to precise positions of the read/write head of the magnetic head (4) on the centres of the tracks on the magnetic tape (3) determined during a measuring operation by positioning onto at least one track, starting from a reference position (B1 to B3), can be stored into the control unit (16), and in that, during the normal operation of the magnetic tape device, the control unit (16) generates the control signals for the motor control (15) using these position values (P).

10. Arrangement according to Claim 9, characterized in that the control unit (16) contains an erasable programmable read-only memory (EPROM), in which the position values (P) can be stored.

11. Arrangement according to Claim 9, characterized in that the control unit (16) comprises an adder (24), which generates the control signals from the set position values (N) and associated correction values (d).

12. Arrangement according to Claim 9, characterized in that the control unit (16) comprises a microcomputer (26), which generates the control signals.

## Revendications

1. Procédé pour positionner une tête magnétique (4) sur différentes pistes d'une bande magnétique (3) dans un appareil à bande magnétique, dans lequel au moins une tête d'écriture/de lecture de la tête magnétique (4) est positionnée, à l'aide d'un dispositif de positionnement pourvu d'un moteur, perpendiculairement à la direction du déplacement de la bande magnétique (3), sur les différentes pistes, et dans lequel on produit, par comparaison des valeurs de la position instantanée de la tête magnétique (4) avec les valeurs de la position de consigne associée aux différentes pistes, des signaux de commande pour une commande de moteur (15) pour attaquer le moteur électrique (9) du dispositif de positionnement, caractérisé par le fait que, pendant un processus de mesure, et par un positionnement sur au moins une piste, en partant d'une position de référence (B1 à B3), on détermine les positions précises de la tête d'écriture/de lecture de la tête magnétique (4) par rapport aux milieux des pistes de la bande magnétique (3), qu'à ces positions précises sont associées des valeurs de position (P), et que pendant le fonctionnement normal de l'appareil à bande magnétique, et avec utilisation de ces valeurs de position (p), on produit les signaux de commande pour la commande du moteur (15).

2. Procédé selon la revendication 1, caractérisé par le fait que les valeurs de position (P) sont formées à partir des mêmes valeurs normales (N) pour une pluralité d'appareils à bandes magnétiques, et des valeurs de correction (d) qui ont été déterminées individuellement pour chaque appareil à bande magnétique.

3. Procédé selon la revendication 1 ou la revendication 2, caractérisé par le fait qu'il ist prévu, comme position de référence, la position de référence (B1) qui est associée à une piste médiane $\frac{n}{2}$, la position de référence (B2) qui est associée à une piste extérieure (O) ou la position de référence (B3) qui est associée à un bord de la bande magnétique (3).

4. Procédé selon une des revendications 1 à 3, caractérisé par le fait que les valeurs de position (P) sont associées respectivement à un nombre prédéterminé de pas pour l'attaque d'un moteur électrique (9) du dispositif de positionnement, et qui est réalisé sous la forme d'un moteur pas-à-pas.

5. Procédé selon l'une des revendications 1 à 3, caractérisé par le fait que les valeurs de position (P) sont respectivement associées à un nombre prédéterminé de signaux de cadence pour l'attaque d'un moteur électrique (9) du dispositif de positionnement, lequel moteur électrique est réalisé sous la forme d'un moteur à courant continu avec un disque de synchronisation.

6. Procédé selon l'une des revendications 1 à 5, caractérisé par le fait que les valeurs de position (P) sont différentes, en fonction de la direction dans laquelle on procède au positionnement sur une piste.

7. Procédé selon l'une des revendications 1 à 6, caractérisé par le fait que les valeurs de position (P) pour les différentes pistes, sont déterminées, par interpolation, du positionnement sur une piste qui est très éloignée de la position de référence (B1 à B3).

8. Procédé selon l'une des revendications 2 à 7, caractérisé par le fait qu'une même valeur de correction (d) est associée à un groupe de pistes voisines sur la bande magnétique.

9. Dispositif pour le positionnement d'une tête magnétique (4) sur différentes pistes d'une bande magnétique (3) dans un appareil à bande magnétique, avec un dispositif de positionnement, pourvu d'un moteur électrique (9), qui positionne, perpendiculairement à la direction du déplacement de la bande magnétique (3), sur les différentes pistes, au moins une tête d'écriture/de lecture, et avec une unité de commande qui, par comparaison des valeurs de position instantenées de la tête magnétique (4) avec les valeurs de position de consigne qui sont associées aux différentes pistes, produit des signaux de commande pour une commande de moteur (15) en vue de l'attaque du moteur électrique (9) du dispositif de positionnement, caractérisé par le fait que dans l'unité de commande (16) sont susceptibles d'être mémorisées les valeurs de position (P) qui, pendant un processus de mesure, par positonnement sur au moins une piste et en partant d'une position de référence (B1 à B2), sont associées aux positions précises de la tête d'écriture/de lecture de la tête magnétique (4) par rapport aux milieux des pistes de la bande magnétique (3), et que l'unité de commande (16) produit, pendant le fonctionnement normal de l'appareil à bande magnétique et avec utilisation de ces valeurs de position (P), les signaux de commande pour la commande de moteurs (15).

10. Dispositif selon la revendication 9, caractérisé par le fait que l'unité de commande (16) comporte une mémoire morte (FS) effaçable et susceptible de recevoir à nouveau des inscriptions, mémoire dans laquelle sont susceptibles d'être mémorisées les valeurs de position (P).

11. Dispositif selon la revendication 9, caractérisé par le fait que l'unité de commnde (16) comporte un additionneur (24) qui produit, à partir des valeurs de position de consigne et des valeurs de correction associées, les signaux de commande.

12. Dispositif selon la revendication 9, caractérisé par le fait que l'unité de commande (16) comporte un microcalculateur (26) qui produit les signaux de commande.

# FIG 1

# FIG 2

## FIG 3

## FIG 4

## FIG 5

## FIG 6